# EUROPEAN PATENT SPECIFICATION

(11) **EP 4 313 685 B1**
(45) Date of publication and mention of the grant of the patent: **08.01.2025**
(21) Application number: 21715816.1
(22) Date of filing: 23.03.2021
(51) Int. Cl.: B60Q 1/40

(54) **ROTARY SWITCH ASSEMBLY WITH A CONTROLLABLE CANCELLING MECHANISM**
DREHSCHALTERANORDNUNG MIT STEUERBAREM AUSLÖSCHMECHANISMUS
ENSEMBLE COMMUTATEUR ROTATIF DOTÉ D'UN MÉCANISME D'ANNULATION POUVANT ÊTRE COMMANDÉ

(43) Date of publication of application: 07.02.2024
(73) Proprietor: MERIT AUTOMOTIVE ELECTRONICS SYSTEMS S.L.U, 08620 - Barcelona (ES)
(72) Inventor: MODLI SKI, Bogus aw, 57-200 Z bkowice l skie (PL); JAGODA, Krystian, 30-552 Kraków (PL)
(74) Representative: Lukaszyk, Szymon
(86) International application number: PCT/EP2021/057449
(87) International publication number: WO 2022/199802

(56) References cited:
- JP-A- S5 242 091
- JP-U- S 588 642
- JP-U- S5 046 082
- US-A- 4 097 700
- US-A- 4 801 770
- US-A- 5 068 633
- US-A- 5 216 399

## Description

The present invention relates to a rotary switch assembly with a controllable cancelling mechanism, in particular for controlling turn-signal lights of an automotive vehicle, comprising a support, an activating rod disposed rotationally within the support and mechanically coupled with an electric signal device, and a self-returning mechanism defining the neutral position of the activating rod.

### Background of the Invention

Rotary switches of this kind are frequently employed in steering wheel column integrated modules (CIM) in an automotive industry. They usually form compact, preassembled units that at the vehicle assembly line are mechanically fixed to the steering wheel column and electrically connected to the vehicle wiring. It is known to implement the self-returning functionality by means of spring plungers acting on a curved cams.

Publication WO2016098436 discloses a turn signal operation device. When the operation lever is rotated from a neutral position, a sliding pin held by the operation lever slides on a guide cam. When the operation lever rotates to the operation position, the sliding pin is held by a holding member, temporarily fixing the operation lever in an operation position and illuminating the turn signal. If illumination of the turn signal is to be cancelled, depending on the travel state of the vehicle, etc., an electromagnetic actuator operates, releasing the temporary fixing of the sliding pin and returning the operation lever to the neutral position.

Publication EP1177942 discloses a switch reset device for vehicle comprising an electromechanical actuator under computer control, which raises the switch lever catch. Relevant turn signal operation devices are known also from publications US 4 097 700, DE3510345, DE102018115330, JPH08132957, or WO2020035212

It has been the object of the present invention to provide a rotary switch assembly with a controllable cancelling mechanism, which would be compact, cost efficient and simple to manufacture and assembly.

### Summary of the Invention

The invention provides a rotary switch assembly with the features defined in claim 1.

Pivoting the activating rod beyond the locked position causes engagement of the engaging projection of the activating slider behind the locking projection and the lever position is to stabilized. Applying voltage to the electromagnet causes the displacement of its slidable rod, rotation of the unlocking lever, displacement of the locking slider in direction opposite to its bias and releasing the activating slider. Self-returning mechanism brings the activating slider to a neutral position along with the activating rod.

Preferably said slidable rod of said electromagnetic actuator is rotationally connected with said unlocking lever at a first radius, and said locking slider is rotationally connected with said unlocking lever at a second radius nonparallel to said first radius.

Preferably said locking slider is biased towards said activating slider by a spring.

Preferably the switch assembly further comprises a cancelling assembly housing, in which said activating slider, said locking slider, and said unlocking lever are disposed, wherein said activating slider has an activating projection disposed within and protruding from a groove of said housing.

Thanks to that the controllable cancelling mechanism may form a preassembled unit.

In this case preferably the activating rod has an activating groove that engages said activating projection of said activating slider.

Preferably said axis of rotation of said unlocking lever is substantially parallel to the axis of rotation of said activating rod.

Preferably said self-returning mechanism comprises a spring plunger cooperating with the activating rod and biasing a cam having an equilibrium position defining the neutral position of the activating rod.

### Brief description of drawings

The invention shall be described and explained below in connection with the attached drawings in which:
Fig. 1 is a schematic perspective top view of a steering wheel column integrated module comprising an embodiment of a rotary switch assembly according to the invention;
Fig. 2 is a schematic perspective side view of a kinematic chain of the rotary switch assembly shown in Fig. 1;
Fig. 3 is a schematic perspective side view (partially disassembled) of the rotary switch assembly shown in Fig. 1;
Fig. 4 is a schematic bottom view (partially disassembled)of the rotary switch assembly shown in Fig. 1 in inactive, neutral position;
Fig. 5 is a schematic top view (partially disassembled) of the rotary switch assembly shown in Fig. 1 in inactive position;
Fig. 6 shows the rotary switch assembly of Fig. 5 upon activation;
Fig. 7 shows the rotary switch assembly of Fig. 6 upon triggering cancelling action;
Fig. 8 shows the rotary switch assembly of Fig. 7 upon returning to inactive position; and
Fig. 9 shows a self-returning haptic assembly of the rotary switch assembly shown in Fig. 1 in cross-sectional view.

### Detailed description of preferred embodiment

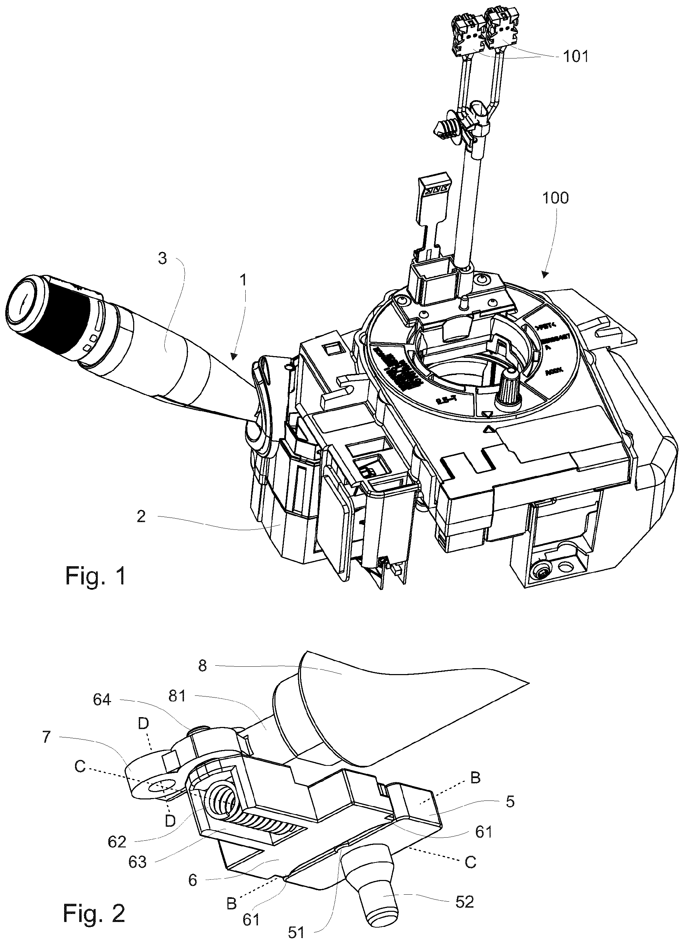

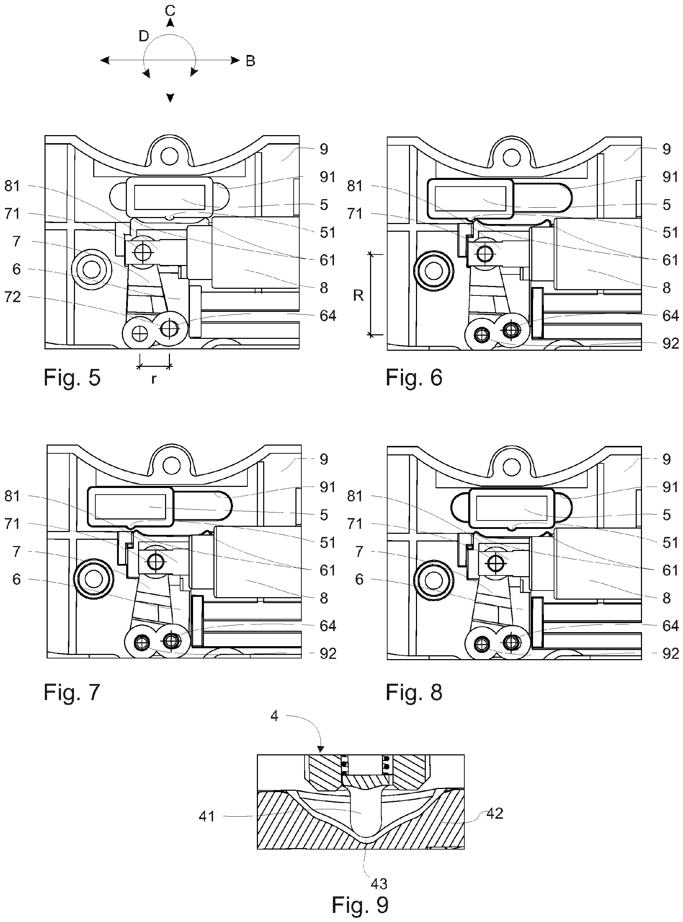

A compact, preassembled steering wheel column integrated module 100 of an automotive vehicle is shown in Fig. 1. The module 100 comprises an embodiment of a rotary switch assembly 1 according to the invention. The assembly 1 comprises a support 2, an activating rod 3 disposed pivotably within the support 2 and mechanically coupled with an electric switch (not shown) connected with a terminal 101. The module 100 can be fixed at the vehicle assembly line mechanically to the steering wheel column and the terminal 101 can be electrically connected to the vehicle wiring (not shown in the drawing) in a manner known to those skilled in the art. The assembly 1 comprises a self-returning haptic mechanism 4 (cf. Fig. 9) comprising a spring plunger 41 fixed to the activating rod 3 and biasing a cam 42 having an equilibrium position defining the neutral position of the rod 3.

Pivoting the rod 3 of the assembly 1 around an axis A may be employed for controlling turn-signal lights of the vehicle. To this end, partway inclination of the rod 3 activates left or right turn-signal lights, for as long the driver holds the rod 3 (to indicate a lane change, for example), so that after releasing the rod 3 the self-returning mechanism 4 restores the rod 3 neutral position. To signal a longer lasting turn the driver inclines the rod 3 all the way up or down until it locks in a stable position. After the turn is completed a controllable cancelling assembly, that shall be explained with reference to Figs. 2-9, unlocks the rod 3 and the returning mechanism 4 again restores the rod 3 neutral position.

The assembly 1 comprises a cancelling assembly housing 9 providing space for all the elements of the cancelling assembly and forming a preassembled unit fixed with the support 2.

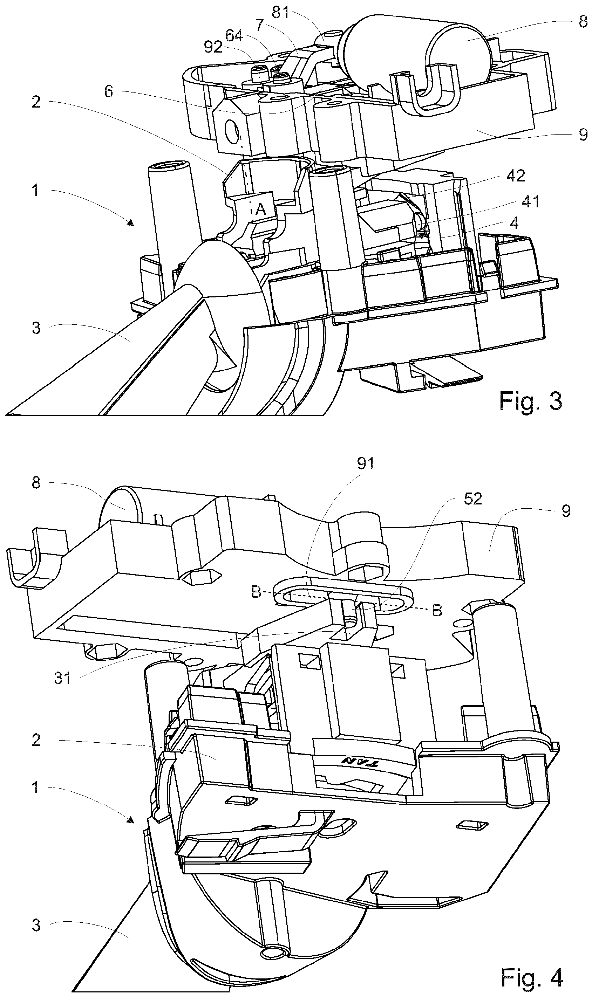

As shown in Fig. 4 the rod 3 is terminated with an activating groove 31 that engages an activating projection 52 of an activating slider 5. The activating projection 52 is disposed within and protrudes from a longitudinal groove 91 of the housing 9, so that the activating slider 5 can slide along an axis B, which in this embodiment is perpendicular to the axis A of rotation of the activating rod 3.

As shown in Figs. 5-8, a locking slider 6 is slidably disposed within the housing 9 and capable of sliding along an axis C perpendicular to the sliding axis B of the activating slider 5. As shown in Fig. 2 the locking slider 6 is biased towards the activating slider 5 by a spring 62 disposed within the locking slider spring cavity 63 and abutting the housing 9. The activating slider 5 comprises a engaging projection 51 facing the locking slider 6. The locking slider 6, on the other hand, comprises two locking projections 61 at the ends of the longitudinal groove 91 corresponding to the assembly 1 locking positions. Neutral position of the rod 3 is shown in Fig. 5.

After the rod 3 is inclined, the activating slider 5 slides along the axis B, and in a certain position its engaging projection 51 will engage one of the locking projections 61 of the locking slider 6, forcing the latter to displace against the pressure of the spring 62. Further inclination of the rod 3 will cause the engaging projection 51 to slide behind the locking projection 61 of the locking slider 6, thus locking the position of the rod 3 due to the pressure of the spring 62, as shown in Fig. 6.

The assembly 1 further comprises an unlocking lever 7 and an electromagnetic actuator 8 having a slidable rod 81. The unlocking lever 7 is disposed rotationally on a cylindrical shaft 92 of the housing 9 about an axis D perpendicular to the plane defined by the sliding axis B of the activating slider 5 and the sliding axis C of the locking slider 6. The unlocking lever 7 is provided with a cylindrical shaft 71 engaging an end of the slidable rod 81 of the electromagnetic actuator 8 at a first radius R substantially parallel with the sliding axis C of the locking slider 6. Thus, the sliding of the rod 81 rotates the unlocking lever 7. The unlocking lever 7 is further provided with an opening 72 in which a cylindrical shaft 64 of the locking slider 6 is disposed at a second radius r, nonparallel to the first radius R, which in this embodiment is substantially parallel with the sliding axis B of the activating slider 5.

In order to trigger controllable cancelling action of the assembly 1 the electromagnetic actuator 8 is energised retracting the slidable rod 81 inside, as shown in Fig. 7. This rotates the unlocking lever 7, which slides the locking slider 6 against the pressure of the spring 62 releasing engagement of the locking projection 61 of the locking slider 6 with the engaging projection 51 of the activating slider 5, and the and the returning mechanism 4 restores the neutral position of the rod 3 along with the activating slider 5, as shown in Fig. 8. After switching off the actuator 8, the locking slider 6 returns to its neutral position shown in Fig. 5 under the pressure of the spring 62. Thanks to that locking functionality of the rotary switch assembly 1 can be temporarily disabled by keeping the electromagnetic actuator 8 energised, so that engagement of the engaging projection 51 of the activating slider 5 with one of the locking projections 61 is impossible.

In other embodiments of the present invention extension of the slidable rod 81 of the electromagnetic actuator 8 could be employed to rotate the unlocking lever 7. In yet another embodiments locking projections 61 could be provided by a support or by a cancelling assembly housing 9.

The above embodiments of the present invention are therefore merely exemplary. The figures are not necessarily to scale and some features may be exaggerated or minimized. The above embodiments and the figures should not be considered as limiting the scope of protection which is defined by the appended claims.

### List of reference numerals

- 1.: rotary switch assembly
- 2.: support
- 3.: activating rod

- 31.: activating groove

- 4.: self-returning haptic assembly

- 41.: spring plunger
- 42.: cam
- 43.: equilibrium position

- 5.: activating slider
- 51.: engaging projection
- 52.: activating projection

- 6.: locking slider

- 61.: locking projection
- 62.: spring
- 63.: spring cavity
- 64.: shaft (of unlocking lever)
- 7.: unlocking lever

- 71.: shaft (of slidable rod)
- 72.: opening (of a shaft 64)

- 8.: electromagnetic actuator

- 81.: slidable rod

- 9.: cancelling assembly housing

- 91.: longitudinal groove
- 92.: shaft (of unlocking lever)

- 100.: steering wheel column integrated module
- 101.: terminal

## Claims

1. A rotary switch assembly (1) with a controllable cancelling mechanism, in particular for controlling turn-signal lights of an automotive vehicle, comprising a support (2),
an activating rod (3) disposed rotationally, about an axis (A) within the support (2) and mechanically coupled with an electric signal device,
a self-returning mechanism (4) defining the neutral position of the activating rod (3), and
an activating slider (5), slidable along another axis (B), different from said axis (A) of said activating rod (3), in a response to an angular movement of the activating rod (3) and provided with at least one engaging projection (51),
**characterized in that** it further comprises a locking slider (6), slidable along an axis (C) substantially perpendicular to said sliding axis (B) of said activating slider (5), and biased towards said activating slider (5);
at least one locking projection (61), provided on said locking slider (6), for engaging said engaging projection (51) of said activating slider (5) to define locked position of the activating rod (3);
an unlocking lever (7) rotationally connected to said support (2) about an axis (D) substantially perpendicular to the plane defined by said sliding axis (B) of said activating slider (5) and said sliding axis (C) of said locking slider (6) and rotationally connected with said locking slider (6); and
an electromagnetic actuator (8) having a slidable rod (81) rotationally connected with said unlocking lever (7) to release engagement of said at least one locking projection (61) with said at least one engaging projection (51) of said activating slider (5).

2. The switch assembly according to Claim 1, **characterized in that** said slidable rod (81) of said electromagnetic actuator (8) is rotationally connected with said unlocking lever (7) at a first radius (R), and said locking slider (6) is rotationally connected with said unlocking lever (7) at a second radius (r) nonparallel to said first radius (R).

3. The switch assembly according to any one of preceding Claims, **characterized in that** said locking slider (6) is biased towards said activating slider (5) by a spring (62).

4. The switch assembly according to any one of preceding Claims, **characterized in that**, it further comprises a cancelling assembly housing (9), in which said activating slider (5), said locking slider (6), and said unlocking lever (7) are disposed, wherein said activating slider (5) has an activating projection (52) disposed within and protruding from a groove (91) of said housing (9).

5. The switch assembly according to Claim 4, **characterized in that**, the activating rod (3) has an activating groove (31) that engages said activating projection (52) of said activating slider (5).

6. The switch assembly according to any one of preceding Claims, **characterized in that**, said axis (D) of rotation of said unlocking lever (7) is substantially parallel to the axis (A) of rotation of said activating rod (3).

7. The switch assembly according to any one of preceding Claims, **characterized in that**, said self-returning mechanism (4) comprises a spring plunger (41) cooperating with the activating rod (3) and biasing a cam (42) having an equilibrium position (43) defining the neutral position of the activating rod (3).

## Patentansprüche

1. Eine Drehschalterbaugruppe (1) mit einem steuerbaren Löschmechanismus, insbesondere zur Steuerung von Blinkern eines Kraftfahrzeugs, die eine einer Stütze (2) umfasst,
einen Aktivierungsstab (3), der um eine Achse (A) drehbar in der Stütze (2) angeordnet und mechanisch mit einer elektrischen Signalvorrichtung gekoppelt ist,
einen selbsttätigen Rückstellmechanismus (4), der die Neutralstellung des Aktivierungsstabs (3) bestimmt, und
einen Aktivierungsschieber (5), der entlang einer anderen Achse (B), die sich von der Achse (A) des Aktivierungsstabs (3) unterscheidet, in Reaktion auf eine Winkelbewegung des Aktivierungsstabs (3) verschiebbar ist und mit mindestens einem Eingriffsvorsprung (51) versehen ist, **dadurch gekennzeichnet, dass** sie ferner einen Verriegelungsschieber (6) umfasst, der entlang einer Achse (C) verschiebbar ist, die im Wesentlichen senkrecht zu der Gleitachse (B) des Aktivierungsschiebers (5) verläuft, und in Richtung des Aktivierungsschiebers (5) vorgespannt ist;
mindestens einen Verriegelungsvorsprung (61), der an dem Verriegelungsschieber (6) vorgesehen ist, um mit dem Eingriffsvorsprung (51) des Aktivierungsschiebers (5) in Eingriff zu kommen, um eine verriegelte Position des Aktivierungsstabs (3) zu definieren;
einen Entriegelungshebel (7), der drehbar mit der Stütze (2) um eine Achse (D) verbunden ist, die im Wesentlichen senkrecht zu der durch die Gleitachse (B) des Aktivierungsschiebers (5) und die Gleitachse (C) des Verriegelungsschiebers (6) definierten Ebene verläuft, und drehbar mit dem Verriegelungsschieber (6) verbunden ist; und
ein elektromagnetisches Betätigungselement (8) mit einer verschiebbaren Stange (81), die drehbar mit dem Entriegelungshebel (7) verbunden ist, um den Eingriff des mindestens einen Verriegelungsvorsprungs (61) mit dem mindestens einen Eingriffsvorsprung (51) des Aktivierungsschiebers (5) zu lösen.

2. Die Schalterbaugruppe nach Anspruch 1, **dadurch gekennzeichnet, dass** die verschiebbare Stange (81) des elektromagnetischen Betätigungselements (8) mit dem Entriegelungshebel (7) in einem ersten Radius (R) drehbar verbunden ist und der Verriegelungsschieber (6) mit dem Entriegelungshebel (7) in einem zweiten Radius (r), der nicht parallel zu dem ersten Radius (R) verläuft, drehbar verbunden ist.

3. Die Schalterbaugruppe nach einem der vorhergehenden Ansprüche, **dadurch gekennzeichnet, dass** der Verriegelungsschieber (6) durch eine Feder (62) in Richtung des Aktivierungsschiebers (5) vorgespannt ist.

4. Die Schalterbaugruppe nach einem der vorhergehenden Ansprüche, **dadurch gekennzeichnet, dass** sie ferner ein Gehäuse (9) der Aufhebungsbaugruppe umfasst, in dem der Aktivierungsschieber (5), der Verriegelungsschieber (6) und der Entriegelungshebel (7) angeordnet sind, wobei der Aktivierungsschieber (5) einen Aktivierungsvorsprung (52) aufweist, der innerhalb einer Nut (91) des Gehäuses (9) angeordnet ist und aus dieser herausragt.

5. Die Schalterbaugruppe nach Anspruch 4, **dadurch gekennzeichnet, dass** der Aktivierungsstab (3) eine Betätigungsnut (31) aufweist, die mit dem Aktivierungsvorsprung (52) des Aktivierungsschiebers (5) in Eingriff steht.

6. Die Schalterbaugruppe nach einem der vorhergehenden Ansprüche, **dadurch gekennzeichnet, dass** die Drehachse (D) des Entriegelungshebels (7) im Wesentlichen parallel zur Drehachse (A) des Aktivierungsstabs (3) verläuft.

7. Die Schalterbaugruppe nach einem der vorhergehenden Ansprüche, **dadurch gekennzeichnet, dass** der selbsttätige Rückstellmechanismus (4) einen Federkolben (41) umfasst, der mit dem Aktivierungsstab (3) zusammenwirkt und einen Nocken (42) vorspannt, der eine Gleichgewichtsposition (43) hat, die die Neutralposition des Aktivierungsstabs (3) definiert.

## Revendications

1. Un ensemble de commutateur rotatif (1) avec un mécanisme d'annulation contrôlable, en particulier pour contrôler les feux clignotants d'un véhicule automobile, comprenant un support (2),
une tige d'activation (3) disposée en rotation autour d'un axe (A) à l'intérieur du support (2) et couplée mécaniquement à un dispositif de signal électrique,
un mécanisme de retour automatique (4) définissant la position neutre de la tige d'activation (3), et
un coulisseau activateur (5), coulissant le long d'un autre axe (B), différent dudit axe (A) de la tige d'activation (3), en réponse à un mouvement angulaire de la tige d'activation (3) et pourvu d'au moins une saillie d'engagement (51), **caractérisé en ce qu'**il comprend en outre un coulisseau de verrouillage (6), coulissant le long d'un axe (C) sensiblement perpendiculaire à l'axe de coulissement (B) dudit coulisseau activateur (5), et sollicité vers ledit coulisseau activateur (5);
au moins une saillie de verrouillage (61), prévue sur ledit coulisseau de verrouillage (6), pour engager ladite saillie d'engagement (51) dudit coulisseau activateur (5) afin de définir la position verrouillée de la tige d'activation (3);
un levier de déverrouillage (7) relié en rotation audit support (2) autour d'un axe (D) sensiblement perpendiculaire au plan défini par ledit axe de coulissement (B) dudit coulisseau activateur (5) et ledit axe de coulissement (C) dudit coulisseau de verrouillage (6), et relié en rotation audit coulisseau de verrouillage (6) ; et un
actionneur électromagnétique (8) comportant une tige coulissante (81) reliée en rotation audit levier de déverrouillage (7) pour libérer l'engagement de ladite au moins une saillie de verrouillage (61) avec ladite au moins une saillie d'engagement (51) dudit coulisseau activateur (5).

2. L'ensemble de commutateur selon la revendication 1, **caractérisé en ce que** ladite tige coulissante (81) dudit actionneur électromagnétique (8) est reliée en rotation audit levier de déverrouillage (7) à un premier rayon (R), et **en ce que** ledit coulisseau de verrouillage (6) est relié en rotation audit levier de déverrouillage (7) à un second rayon (r) non parallèle audit premier rayon (R).

3. L'ensemble de commutateur selon l'une quelconque des revendications précédentes, **caractérisé en ce que** ledit coulisseau de verrouillage (6) est sollicité vers ledit coulisseau activateur (5) par un ressort (62).

4. L'ensemble de commutateur selon l'une quelconque des revendications précédentes, **caractérisé en ce qu'**il comprend en outre un boîtier d'ensemble d'annulation (9), dans lequel sont disposés ledit coulisseau activateur (5), ledit coulisseau de verrouillage (6) et ledit levier de déverrouillage (7), dans lequel ledit coulisseau activateur (5) comporte une saillie d'activation (52) disposée à l'intérieur d'une rainure (91) dudit boîtier (9) et faisant saillie de cette rainure.

5. L'ensemble de commutateur selon la revendication 4, **caractérisé en ce que** la tige d'activation (3) a une rainure d'activation (31) qui s'engage dans ladite saillie d'activation (52) dudit coulisseau activateur (5).

6. L'ensemble de commutateur selon l'une quelconque des revendications précédentes, **caractérisé en ce que**, ledit axe (D) de rotation dudit levier de déverrouillage (7) est sensiblement parallèle à l'axe (A) de rotation de ladite tige d'activation (3).

7. L'ensemble de commutateur selon l'une quelconque des revendications précédentes, **caractérisé en ce que** ledit mécanisme à retour automatique (4) comprend un piston à ressort (41) coopérant avec la tige d'activation (3) et sollicitant une came (42) ayant une position d'équilibre (43) définissant la position neutre de la tige d'activation (3).
